# EUROPEAN PATENT APPLICATION

(11) **EP 2 254 177 A2**
(43) Date of publication of application: **24.11.2010**
(21) Application number: 10171505.0
(22) Date of filing: 30.05.2006
(51) Int. Cl.: H01M 2/36

(54) **Battery electrolyte level control system**

(30) Priority: 28.05.2005 US 685735 P
(62) Divisional of application: 06771645.6
(71) Applicant: Aerovironment inc., Monrovia, CA 91016 (US)
(72) Inventor: Hayashigawa, Larry, Orange, CA 92869 (US)
(74) Representative: Knights, Rupert

(57) **Abstract**

An electrolyte level control system for adding a fluid to an electrolyte within a battery chamber defined by a battery carried by an electric vehicle, comprising: a reservoir configured to contain a quantity of the fluid; a battery-charge sensor configured to sense the state of charge of the battery; and a battery-refill control system configured to control the distribution of the fluid from the reservoir to the battery chamber based upon the state of charge sensed by the battery-charge sensor.

## Description

This application claims the benefit of U.S. provisional Application No. 60/685,735, filed May 28, 2005, which is incorporated herein by reference for all purposes.

The present invention relates generally to a battery electrolyte refill system, and, more particularly, to an apparatus and related methods for adding water to the electrolyte of a battery at times conducive to maintaining battery life while avoiding electrolyte overflow during periods of battery recharging.

### BACKGROUND OF THE INVENTION

Battery-operated vehicles, such as forklifts, trucks, golf carts, and the like, require periodic recharging. To maintain the battery life of the batteries in such vehicles, the battery electrolyte levels need to be replenished regularly. In many cases, busy fleets of these vehicles are maintained and used by a variety of personnel who may lack the time, training, and/or motivation to properly service the batteries. Moreover, leading-edge battery charging systems now operate using intelligent fast-charging techniques to provide charging during short periods of time, such as employee breaks and shift changes. These limited-time charges can be provided in a variety of remote locations outside of the traditional battery charging rooms that have dedicated personnel to swap batteries in and out of vehicles for slow-charging. In these remote locations, skilled on-duty personnel may not be available to attend to manual battery maintenance procedures, such as checking and refilling electrolyte levels at the proper times.

Optimally, battery electrolyte levels are refilled frequently so as to avoid operating the batteries at low electrolyte levels, which can shorten battery life. Batteries may include a hydro-mechanical valve configured to operate as both a level sensor and a cutoff valve to prevent overflowing during the operation of refilling the battery. Nevertheless, because electrolyte is displaced when the state of charge of the battery is increased, batteries that have water added during a low state of charge may have an electrolyte overflow while subsequently being charged. The overflowing electrolyte may be very acidic (e.g., it may contain a strong solution of hydrochloric acid), and can present a significant danger to personnel, vehicles and the surrounding flooring. Therefore, it is preferable that the battery electrolyte levels are raised when the batteries are fully charged, or at least at a high state of charge. Alternatively, it would be preferable that they not be fully refilled when the batteries are not fully charged.

For example, in a two million square-foot plant, 100 battery-operated vehicles may be in full-time operation, not remaining stationary for more than one or two hours after charging (e.g., equalization). For such a fleet of vehicles, it may prove difficult for personnel to check and water (i.e., raise the electrolyte levels within) all the batteries immediately after equalization. As a result, many of the batteries may not be watered at the proper time, and maintenance personnel may be forced to water the batteries when they are at a low state of charge. When the batteries are subsequently charged, displaced electrolyte might overflow the batteries, and the hydrochloric acid within the electrolyte may cause damage to the vehicles and the surrounding floors. If this scenario is updated to include a plurality of fast-charge sessions throughout the day, the problem is exacerbated.

Accordingly, there has existed a need for an easily maintainable battery electrolyte refill system configured to maintain battery life and improve safe operation by maintaining proper electrolyte levels, and to minimize spill risks by adding water to the batteries at preferable times. Preferred embodiments of the present invention satisfy these and other needs, and provide further related advantages.

### SUMMARY OF THE INVENTION

In various embodiments, the present invention solves some or all of the needs mentioned above, providing an electrolyte raising system that can maintain battery life and improve safe operation by maintaining proper electrolyte levels, while minimizing spill risks by watering the batteries at preferable times and/or in preferable quantities.

A typical electrolyte level control system under the present invention, being configured for adding to a quantity of fluid to an electrolyte within a battery chamber defined by a battery carried by an electric vehicle, includes a reservoir configured to contain a quantity of the fluid. The invention further includes a battery-charge sensor configured to sense the state of charge of the battery, and a battery-refill control system. Advantageously, the battery-refill control system is configured to control the distribution of the fluid from the reservoir to the battery chamber based upon the state of charge sensed by the battery-charge sensor. Thus, batteries will not be filled (or will not be overfilled) by the electrolyte level control system when the state of charge does not warrant the battery to be fully filled.

The electrolyte level control system further features a distribution system forming a passageway configured to place the reservoir in fluid communication with the battery chamber. The battery-refill control system is configured to control the distribution of the fluid from the reservoir by controlling a valve in the distribution system.

The reservoir features a reservoir level sensor capable of detecting both information on the level of fluid in the reservoir, and information usable to identify lateral motion of the fluid within the reservoir. This feature provides for the battery-refill control system to be provided with information allowing it to only allow distribution of the fluid from the reservoir to the battery chamber when the detected information indicates that the fluid within the reservoir is not significantly moving laterally. Advantageously, this provides for the refill operations to only take place when the vehicle is not substantially active.

Other features and advantages of the invention will become apparent from the following detailed description of the preferred embodiments, taken with the accompanying drawings, which illustrate, by way of example, the principles of the invention. The detailed description of particular preferred embodiments, as set out below to enable one to build and use an embodiment of the invention, are not intended to limit the enumerated claims, but rather, they are intended to serve as particular examples of the claimed invention.

### BRIEF DESCRIPTION OF THE DRAWINGS

FIG. 1 is a partially cut-away system diagram for a vehicle under a first embodiment of the present invention.
FIG. 2 is a block diagram of a decision tree for a method under the present invention.
FIG. 3 is a partially cut-away system diagram for a vehicle under a second embodiment of the present invention.
FIG. 4 is a block diagram of a second decision tree for a method under the present invention.

### DETAILED DESCRIPTION OF THE PREFERRED EMBODIMENTS

The invention defined by the enumerated claims may be better understood by referring to the following detailed description, which should be read with the accompanying drawings. This detailed description of particular preferred embodiments of the invention, set out below to enable one to build and use particular implementations of the invention, is not intended to limit the enumerated claims, but rather, it is intended to provide particular examples of them.

Typical embodiments of the present invention reside in an electric vehicle including a battery electrolyte refill system. Other embodiments of the present invention reside in the battery electrolyte refill system itself, components thereof, and related methods of providing such systems, using such systems and implementing such systems.

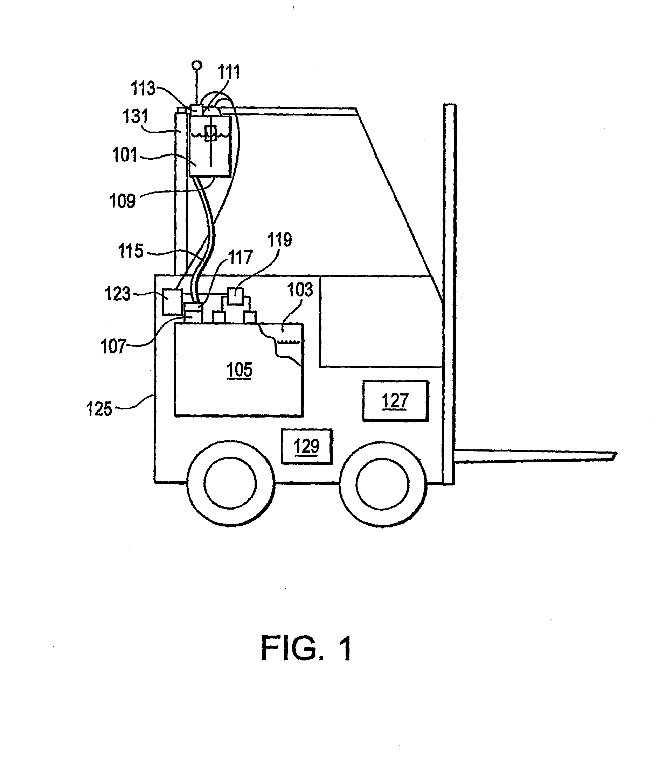

With reference to FIG. 1, a first embodiment of a system for adding a quantity of fluid, e.g., water 101, to raise the electrolyte level in a battery chamber 103 within a battery 105 having a hydro-mechanical cutoff valve 107, includes a reservoir 109, a reservoir-level sensor 111, a transmitter 113, a distribution system 115, a solenoid valve 117, a battery-charge sensor 119 and a battery-electrolyte control system 123. This embodiment is configured for use in a vehicle 125, such as a forklift having a lift controller 127 and a drive controller 129. The vehicle may be operated in isolation, or may be part of a fleet of two or more of such vehicles, each of which is preferably provided with its own system for adding water to its battery under the present invention.

The reservoir 109 forms a translucent-walled chamber that is configured to contain water, and may preferably have a capacity of somewhere between one and five gallons. Because the reservoir chamber has translucent walls, the water level within the reservoir may be easily observed by an operator of the vehicle 125, or by an inspection crew member at a charging station, and thus the reservoir chamber serves as an easily checked visual indicator of the water level. Unlike the battery chamber 103, the reservoir 109 can be refilled at any time by an operator with limited skill or training.

The reservoir 109 is preferably mounted high on a roll bar 131 of the vehicle 125, and is positioned such that the water in the reservoir is gravitationally higher than the electrolyte in the battery chamber 103. As such, water from the reservoir may be gravity fed to the battery chamber. Additionally, because the reservoir is in an open and accessible location, an operator may refill it without having to open significant panels on the vehicle 125. In alternative embodiments, the system may include appropriate devices to pump or pressure feed the water in addition to, or rather than, relying on the force of gravity. Also, in alternative embodiments the system may have reservoir refill lines, which may be plugged into an intelligent charging system at the same time the vehicle is connected for recharge.

The reservoir-level sensor 111 is configured to sense the level of water within the reservoir chamber, and more particularly, to identify a low-reservoir condition and/or an inadequate reservoir level condition. The vehicle may be configured to respond to a detection of a low-reservoir condition or an inadequate reservoir level condition in a variety of ways. Preferably, it is configured to communicate the sensed level to the battery-electrolyte control system 123. The transmitter 113 may be configured to transmit a reservoir-status signal, such as to the driver and/or a fleet control center, indicating the fill-level of the reservoir or the need for system maintenance for the addition of water to the reservoir. The transmitter may receive the information for transmission directly from the reservoir level sensor, or from the battery-electrolyte control system 123. The vehicle may also be configured with a warning light to alert the driver in case he has failed to notice the low or inadequate fluid level through the transparent reservoir.

Additionally, the lift controller 127 and/or the drive controller 129 may be configured to deactivate their operability when the reservoir-level sensor senses that there is an inadequate level of water within the reservoir. This can either be configured to happen based upon a signal from the battery-electrolyte control system, or from more direct communication from the reservoir-level sensor. Preferably, the driver would have a substantial warning (e.g., a warning light) prior to any such deactivation, and optionally there would be an override. Optionally, the deactivation could be only partial. For example, the lift controller could be deactivated, while the drive controller could remain activated, thus allowing the vehicle to return to a watering station, while preventing continued work when the battery would be detrimentally affected.

Alternatively, a battery controller, which may be integral with the battery-electrolyte control system 123, can be configured to prevent any significant discharge of the battery if the reservoir-level sensor does not sense an adequate level of water within the reservoir chamber. This may, for example, work by simply disconnecting battery power from the vehicle 125, or by disconnecting it from most parts of the vehicle other than the battery controller and its related components.

The reservoir chamber is placed in fluid communication with the battery chamber 103 by the distribution system 115, which forms a passageway for fluid communication between the two chambers. The distribution system may be of a variety of designs, as is known in the art. The distribution system may optionally be configured to connect to the reservoir 109 with any additional batteries or battery cells with which the vehicle 125 is equipped.

To provide for controlled release of the reservoir water to the battery 105, the distribution system 115 works in conjunction with the solenoid valve 117, which is configured to repeatedly switch between an open position allowing the two chambers to be in fluid communication, and a closed position preventing fluid communication between the two chambers. In the open position, the solenoid valve allows the distribution system passageway to distribute water from the reservoir chamber to the battery chamber 103 via (and to the extent allowed by) the hydro-mechanical cutoff valve 107 (e.g., until the battery chamber is near full or full). In the closed position, the solenoid valve prevents the distribution system passageway from distributing water from the reservoir chamber to the battery chamber, even if the battery chamber is less than full.

The battery control system is preferably a computerized system configured to control and track the charging, discharging and maintenance of the battery 105. The battery control system is preferably provided with a load controller, which is circuitry and/or other devices configured to control the charge rate of the battery (or batteries) in conjunction with an intelligent controller in a charging system, which may be one configured to charge the batteries of the fleet of vehicles. The battery control system preferably tracks the state of charge, the charging history and discharging history of the battery to the extent such information is useful in maximizing the useful life of the battery. It may be further configured to track the watering history of the battery, the filling history of the reservoir, and the amount of battery use when the reservoir is low or inadequately full.

Working in conjunction with (and in communication with) the battery-electrolyte control system 123 is the battery-charge sensor 119, which is a sensor configured to sense the state of charge of the battery 105. In the case where the vehicle has a plurality of batteries or battery cells (hereinafter just referred to as a plurality of batteries), there might be an additional battery-charge sensor for each such battery, all of which work in conjunction with the battery-electrolyte control system. In such a case, the battery electrolyte control system may operate to sense the minimum state of charge among the batteries, so as to limit watering the plurality of the batteries based on the battery that would be most likely to be overfilled.

In order to control the electrolyte level in the battery chamber 103, the battery-electrolyte control system 123 is configured to electronically control the position of the solenoid valve 117, which is configured to respond to a control signal from the battery-electrolyte control system. More particularly, to affect the distribution of water from the reservoir chamber to the battery chamber, the battery-electrolyte control system preferably sends a control signal that directs the solenoid valve to be open when water is to be distributed, and to be closed at all other times. In deciding when the solenoid valve should be open, the battery-electrolyte control system preferably uses information regarding the battery 105 state of charge as sensed by the battery-charge sensor 119, and the level of water within the reservoir chamber as sensed by the reservoir-level sensor 111.

For example, when the battery-electrolyte control system 123 has an indication that the battery 105 is in a substantially full state of charge (and likely has been recently equalized), and when the reservoir-level sensor 111 senses adequate water within the reservoir 109, then the battery-electrolyte control system sends a control signal to the solenoid valve 117, causing it to switch from the closed position to the open position. Similarly, when the battery-charge sensor 119 senses that the battery is not fully charged or in a high state of charge, then the battery-electrolyte control system maintains the solenoid valve in a closed position.

The battery-electrolyte control system may be configured in numerous ways. For example, in a simple embodiment the battery-electrolyte control system may be a simple SOC (state of charge) sensor configured to actuate the solenoid valve based on the state of charge of the battery.

While the various sensor readings have only been described as instantaneous readings, either the sensors or the control system will preferably use some means for ignoring transient conditions, such as considering a series of readings over a period of time. Such a system for ignoring transient events will help avoid system errors, such as the incorrect sending of maintenance transmissions or the incorrect shutting down of battery 105 usage based on a transient low water-level reading within the reservoir 109.

It may be preferable that the battery electrolyte refill system include a vehicle-use and/or vehicle motion sensing system, i.e., a vehicle activity sensing system, to avoid filling the battery during use and/or motion of the vehicle. In one simple embodiment, signals from the reservoir-level sensor 111 may be monitored for significant transience indicating a significant lateral or vertical motion of the water within the reservoir chamber (and thus the activity of the vehicle). Alternatively, the battery-electrolyte control system may receive signals from the lift controller 127 and drive controller 129 indicating vehicle activity, or the battery-electrolyte control system may receive information on (or monitor) current flow from the battery.

While the battery-electrolyte control system 123 has been described as a single unified unit, it should be understood that it could comprise a series of limited controllers, each conducting its own function within the overall system. Additionally, it is to be understood that the invention comprises apparatus and methods for designing battery watering systems and for producing battery watering systems, as well as the apparatus and methods of the battery watering system itself. The above disclosed features can be combined in a wide variety of configurations within the anticipated scope of the invention.

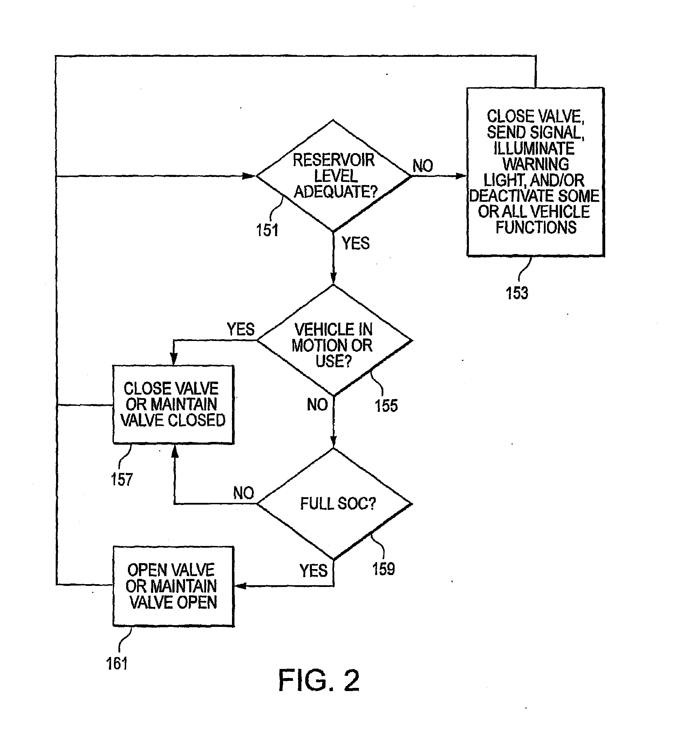

The battery electrolyte refill system operates by making a series of decisions based on available information. With reference to FIG. 2, the fluid level of the reservoir measured by the reservoir-level sensor is tested 151 for adequacy. If the reservoir level is not adequate (when analyzed for its non-transient content), a signal is sent regarding the inadequate level of the reservoir, an operator warning light is lighted and/or some or all vehicle operations are deactivated 153. If the reservoir level is adequate, the detected activity (vehicle motion and/or use) is tested 155 to see if the vehicle is active. If the vehicle is active, then the solenoid valve is either maintained in or switched to the closed position 157. If the vehicle is not active (e.g., if the driver is occupied or on break, or if the vehicle is being charged), then the detected battery state of charge is tested 159 to see if the battery charge level is at or greater than a threshold level that is considered to be fully charged. If the battery charge level is not at (i.e. equal to or greater than) the threshold level, then the solenoid valve is either maintained in or switched to the closed position 157. If, however, the battery charge level is at the threshold level, then the solenoid valve is either maintained in or switched to the open position 161. This set of control decisions is repeated continuously and/or periodically.

It should be understood that variations of this set of control decisions, such as changing the order of decision-making or having the decisions made in parallel rather than in series, is considered within the scope of the preferred embodiments of the invention. Furthermore, it should be understood that the deactivation of the vehicle may be conducted in a separate decision-making process from the valve control process. Thus, in some preferred embodiments, the solenoid valve will be opened to allow the reservoir to fill the battery whenever the battery is at the threshold level for a full state of charge. Preferably (although not necessarily) this open valve procedure is done only when the vehicle is not in motion or use.

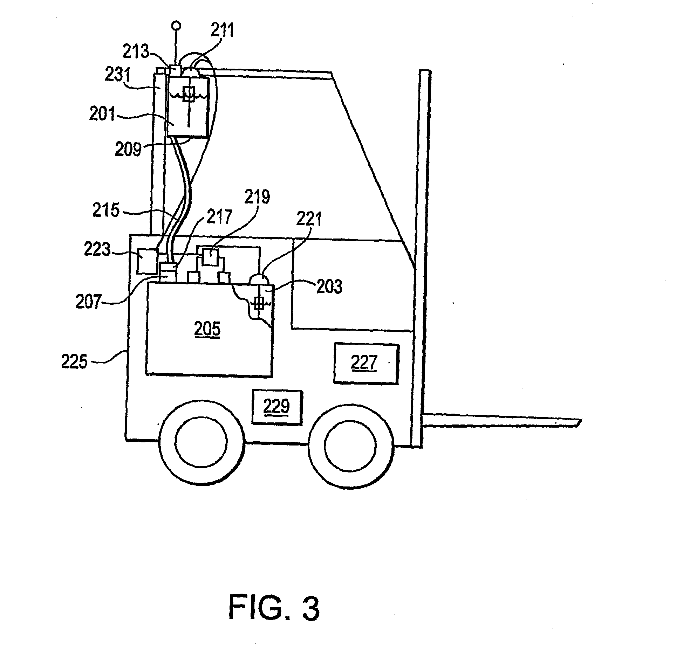

With reference to FIG. 3, a second embodiment of a system for adding a quantity of fluid, e.g., water 201, to raise the electrolyte level in a battery chamber 203 within a battery 205 having a hydro-mechanical cutoff valve 207, includes a reservoir 209, a reservoir-level sensor 211, a transmitter 213, a distribution system 215, a solenoid valve 217, a battery-charge sensor 219, a battery-electrolyte-level sensor 221 and a battery-electrolyte control system 223. This embodiment is configured for use in a vehicle 225, such as a forklift having a lift controller 227 and a drive controller 229. The vehicle is part of a fleet of two or more of such vehicles, each of which is preferably provided with its own system for adding water to its battery under the present invention.

As previously described, the reservoir 209 forms a translucent-walled chamber that is configured to contain water, and preferably has a capacity of somewhere between one and five gallons. As before, the reservoir 209 is preferably mounted on a roll bar 231 of the vehicle 225, and is positioned such that the water in the reservoir is gravitationally higher than the electrolyte in the battery chamber 203. The reservoir-level sensor 211 and the transmitter 213 are configured to operate in a manner similar to that described for the first embodiment, and the reservoir may have refill hoses and hookups for the control of a smart charging system that preferably receives reservoir and/or battery electrolyte level information.

A battery controller, which may be separate or integral with the battery-electrolyte control system 223, can be configured to prevent discharge of the battery if both the reservoir-level sensor 211 and the battery-electrolyte-level sensor 221 do not sense an adequate levels of water either within either the reservoir chamber or the battery chamber. This may optionally operate by simply disconnecting battery power from most or all of the systems of the vehicle 225, or by directing the lift controller 227 and/or drive controller 229 (and/or any other physically active systems) to cut off operation at least until the battery chamber contains enough electrolyte to proceed.

Additionally, the battery controller and battery-electrolyte control system 223 could be configured to temporarily halt discharge of the battery if the battery-electrolyte-level sensor 221 senses that the level of water within the battery chamber is inadequate, while the reservoir-level sensor 211 senses that the level of water within the reservoir chamber is adequate to partially or totally fill the battery chamber. This temporary halt to vehicle use and motion may provide a safer environment for the refill of the battery chamber from the reservoir chamber.

The reservoir chamber, as previously described, is placed in fluid communication with the battery chamber 203 by the distribution system 215. Likewise, to provide for controlled release of the reservoir water to the battery 205, the distribution system 215 works in conjunction with the solenoid valve 217, which is configured to repeatedly switch between an open position allowing the two chambers to be in fluid communication, and a closed position preventing fluid communication between the two chambers. The battery control system, as previously described, is preferably a computerized system configured to control and track the charging, discharging and maintenance of the battery 205.

Working in conjunction with (and in communication with) the battery-electrolyte control system 223 is the battery-charge sensor 219, which is a sensor configured to sense the state of charge of the battery 205. Also working in conjunction with (and in communication with) the battery-electrolyte control system is the battery-electrolyte-level sensor 221, which is configured to sense the level of electrolyte within the battery chamber 203. In the case where the vehicle has a plurality of batteries, there might be an additional battery-charge sensor and/or battery-electrolyte-level sensor for each such battery, all of which work in conjunction with the battery-electrolyte control system to separately determine and respond to the fill needs of each battery.

In order to control the electrolyte level in the battery chamber 203, the battery-electrolyte control system 223 is configured to electronically control the position of the solenoid valve 217, which is configured to respond to a control signal from the battery-electrolyte control system. More particularly, to affect the distribution of water from the reservoir chamber to the battery chamber, the battery-electrolyte control system preferably sends a control signal that directs the solenoid valve to be open when water is to be distributed, and to be closed at all other times. In deciding when the solenoid valve should be open, the battery-electrolyte control system preferably uses information regarding the battery 205 state of charge as sensed by the battery-charge sensor 219, the level of water within the reservoir chamber as sensed by the reservoir-level sensor 211, and the level of electrolyte within the battery chamber as sensed by the battery-electrolyte-level sensor 221.

For example, when the battery-electrolyte control system 223 has an indication that the battery 205 has a substantially full state of charge (e.g., it has been recently equalized), when the battery-electrolyte-level sensor 221 senses a level of electrolyte in the battery chamber 203 below a full-battery level, and when the reservoir-level sensor 211 senses adequate water within the reservoir 209, then the battery-electrolyte control system sends a control signal to the solenoid valve 217, causing it to switch from the closed position to the open position.

When any of the above-noted conditions are no longer true, e.g., when the battery-electrolyte-level sensor 221 senses a level of electrolyte in the battery chamber 203 that is at a full-battery level, or when the reservoir-level sensor 211 senses an inadequate water level (i.e., a level below some minimal acceptable level) within the reservoir 209, then the battery-electrolyte control system 223 sends a control signal to the solenoid valve 217, causing it to switch from the open position to the closed position. As they are discussed herein, it should be understood that the various fluid levels might be treated as ranges. For example, the battery chamber might be refilled when the fluid level goes below a lower end of a range, and the refill might be stopped when the fluid level reaches an upper end of that range.

Preferably, the battery-electrolyte control system of this second embodiment includes a second function providing for the watering of partially discharged batteries. In particular, when the battery-charge sensor 219 senses that the battery is not fully charged or is not in a high state of charge, when the battery-electrolyte-level sensor senses a level of electrolyte in the battery chamber below some minimum acceptable level of operation (e.g., a minimum safe operating level below which battery life could be lost, such as a minimum safe operating level being safely below a level at which an overflow could be caused by on subsequent equalization), and when the reservoir-level sensor senses adequate water within the reservoir, then the battery-electrolyte control system sends a control signal to the solenoid valve, causing it to switch from the closed position to the open position.

In this case, when the battery-electrolyte-level sensor subsequently senses a level of electrolyte in the battery chamber reaching a cutoff level (e.g., a level adequate for safe battery operation that is also safely below a level at which an overflow could be caused by on subsequent equalization), then the solenoid valve is again closed. This operation provides for partially discharged batteries to be safely watered between when they are fully charged, although only up to a fill level that will safely allow for the increase in electrolyte level during subsequent equalization. Optionally, the selection of the minimum acceptable level of operation and the cutoff level could be made dependent on the state of charge of the battery. Also, the minimum acceptable level of operation and the cutoff level could be one and the same, especially for a system that only allows the refilling of a battery while the vehicle is not active.

If the vehicle is provided with additional batteries (i.e., with a plurality of batteries), the distribution system is preferably configured to connect to the reservoir 209 with each battery. Preferably the refill system is configured with a separate solenoid valve for each battery, or at least for each battery that has a separate battery-electrolyte-level sensor. The battery-electrolyte control system may be configured to operate each solenoid valve separately, thus being configured for simultaneously filling fully charged and partially charged batteries appropriately for their individual needs, following the methods of filling described herein.

As in the previous embodiment, while the various sensor readings have only been described as instantaneous readings, either the sensors or the control system will preferably use some means for ignoring transient conditions, such as considering a series of readings over a period of time. Likewise, it is preferable that the battery electrolyte refill system include a vehicle-use and/or vehicle motion sensing system to avoid filling the battery during vehicle activity.

While the battery-electrolyte control system 223 has been described as a single unified unit, it should be understood that it could comprise a series of limited controllers, each conducting its own function within the overall system. Additionally, it is to be understood that the invention comprises apparatus and methods for designing battery watering systems and for producing battery watering systems, as well as the apparatus and methods of the battery watering system itself. The above disclosed features can be combined in a wide variety of configurations within the anticipated scope of the invention.

Moreover, the system of the present invention is envisioned to work in conjunction with a charging system as described in U.S. Patent Application No. 10/616,542, filed July 10, 2003, which is incorporated herein by reference for all purposes. More particularly, the battery-electrolyte control system of the present invention is envisioned to cooperate with the charging system as is described in the charging system application with reference to a battery-electrolyte control system. Thus, during a session of charging, when the battery has reached a full state of charge, the watering system can be activated to top off the battery. Moreover, the combined apparatus of the charging system and the battery charging system, along with the methods representing its functional interrelationships, are considered within the scope of the present invention.

Additionally, it is considered within the scope of the present invention for the charging system of the above-referenced application to include apparatus, control logic and related methods for maintaining the water level within the reservoir while the battery is being charged. To do so, the battery-electrolyte control system may inform the charging system that the level of water within the reservoir chamber is below a selected full-reservoir level. The reservoir chamber may be refilled either by the use of a charging system apparatus configured to automatically refill the reservoir, or by a charging system indicator configured to instruct local personnel to fill the reservoir chamber with water.

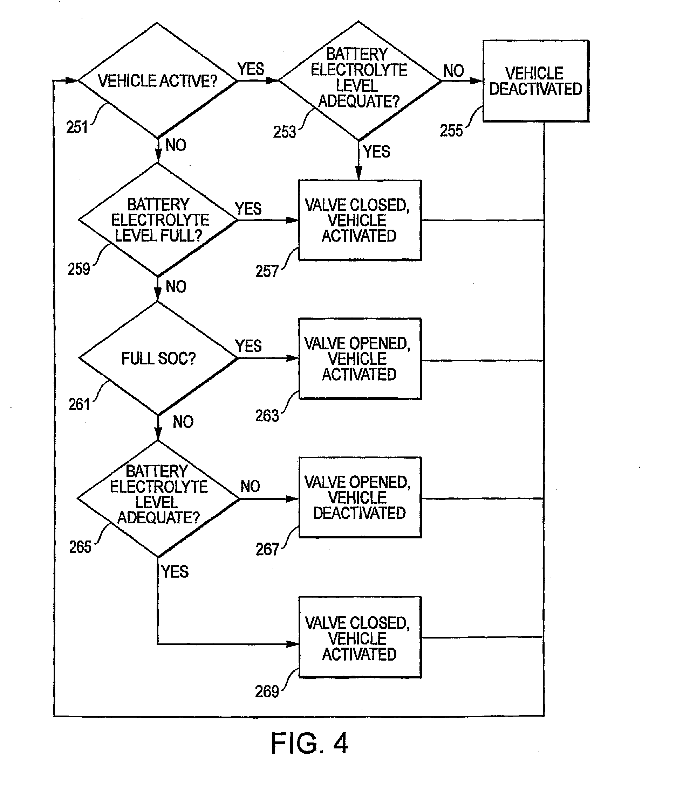

The second embodiment of a battery electrolyte refill system operates by making a series of decisions based on available information. With reference to FIG. 4, the detected vehicle activity level is tested 251. If the vehicle is active (i.e., in motion or use), the detected battery level is tested 253 to see if it is at an adequate level for operation. If the battery electrolyte level is not adequate for operation, the vehicle is deactivated 255. If the battery electrolyte level is adequate for operation, the solenoid valve is maintained in or changed to the closed position, and the vehicle systems remain activated 257. If the vehicle activity test 251 shows the vehicle is not active, the detected battery electrolyte level is tested 259 to see if it is full. If it is full, then the solenoid valve is maintained in or changed to the closed position, and the vehicle systems are maintained in or changed to an activated state 257. However, if the tested battery electrolyte level proves to not be full, then the detection of the battery state of charge is tested 261 for a full state of charge. If a full state of charge is detected, the solenoid valve is opened or maintained in an open position, and the vehicle is activated or maintained in a activated state 263. If, however, a full state of charge is not detected, then the detected battery electrolyte level is tested 265 for adequacy. If the battery electrolyte level is found inadequate, the solenoid valve is opened or maintained in an open position, and the vehicle is deactivated or maintained in a deactivated state 267. If, instead, the battery level is found to be adequate, the solenoid valve is closed and maintained in the closed position, and the vehicle is activated or maintained in the activated state 269. In parallel with this entire process, if the detected reservoir level is ever low or inadequate, a warning is broadcast and/or displayed. This set of control decisions is repeated continuously and/or periodically.

It should be understood that variations of this set of control decisions, such as changing the order of decision-making or having the decisions made in parallel rather than in series, is considered within the scope of the preferred embodiments of the invention. Furthermore, it should be understood that the deactivation of the vehicle may be conducted in a separate decision-making process from the valve control process. Thus, in some preferred embodiments, the solenoid valve will be opened to allow the reservoir to fill the battery whenever the battery is at the threshold level for a full state of charge. Preferably (although not necessarily) this open valve procedure is done only when the vehicle is not in motion or use.

While particular forms of the invention have been illustrated and described, it will be apparent that various modifications can be made without departing from the spirit and scope of the invention. Thus, although the invention has been described in detail with reference only to the preferred embodiments, those having ordinary skill in the art will appreciate that various modifications can be made without departing from the scope of the invention. Accordingly, the invention is not intended to be limited by the above discussion, and is defined with reference to the following claims.

## Claims

1. An electrolyte level control system for adding a fluid (101) to an electrolyte within a battery chamber (103) defined by a battery (105) carried by an electric vehicle (125), comprising:
a reservoir (109) configured to contain a quantity of the fluid;
a battery-charge sensor (119) configured to sense the state of charge of the battery; and
a battery-refill control system (123) configured to control the distribution of the fluid from the reservoir to the battery chamber based upon the state of charge sensed by the battery-charge sensor (119), **characterized in**
further comprising a transmitter (213) configured to transmit a reservoir-status signal containing information on the level of fluid within the reservoir (109).

2. The electrolyte level control system of claim 1, wherein the transmitter (213) is configured to transmit the reservoir-status signal to a fleet control center.

3. The electrolyte level control system of claim 2, wherein the transmitter (213) is configured to transmit the reservoir-status signal to the fleet control center while the vehicle is not at a charging station.

4. The electrolyte level control system of any preceding claim, and further comprising a distribution system (115) forming a passageway configured to place the reservoir (109) in fluid communication with the battery chamber (103), wherein the battery-refill control system is configured to control the distribution of the fluid from the reservoir (109) by controlling a valve (117) in the distribution system.

5. The electrolyte level control system of any preceding claim, wherein the battery-refill control system is further configured to only allow distribution of the fluid from the reservoir (109) to the battery chamber (103) when the sensed battery state of charge is at a level that is above a threshold value.

6. The electrolyte level control system of any preceding claim, and further comprising a vehicle activity sensor (111) configured to detect vehicle activity information, wherein the battery-refill control system (123) is further configured to only allow distribution of the fluid from the reservoir to the battery chamber when the detected vehicle activity information indicates that the vehicle is not active.

7. The electrolyte level control system of any preceding claim, wherein the electrolyte level control system (223) is configured to deactivate at least a portion of the vehicle (125) when the reservoir level is below a threshold level.

8. The electrolyte level control system of any preceding claim, and further configured with a battery-electrolyte-level sensor (221) configured to sense a level of electrolyte within the battery.

9. The electrolyte level control system of any preceding claim, wherein the electrolyte level control system (223) is configured to deactivate at least a portion of the vehicle (225) when the level of electrolyte within the battery is below a threshold level.

10. The electrolyte level control system of any preceding claim, wherein the battery-electrolyte control system (223) is configured to control the distribution of water from the reservoir chamber (209) to the battery chamber based upon the state of charge as sensed by the battery-charge sensor, and the level of electrolyte within the battery chamber as sensed by the battery-electrolyte-level sensor (221).

11. A method for adding a fluid (101) to an electrolyte within a battery chamber (103) defined by a battery carried by an electric vehicle (125), comprising:
sensing a state of charge of the battery; and
controlling the distribution of the fluid, from a reservoir (109) configured to contain a quantity of the fluid (101), to the battery chamber, based upon the sensed state of charge,
the method being **characterized in** further comprising the step of:
transmitting a reservoir-status signal containing information on the level of fluid within the reservoir.

12. The method of claim 11, wherein the reservoir-status signal is transmitted to a fleet control center.

13. The method of claim 12, wherein the reservoir-status signal is transmitted to the fleet control center while the vehicle is not at a charging station.

14. The method of any of claims 11 to 13, wherein in the step of controlling the distribution, the distribution is further controlled to only allow distribution if the sensed battery state of charge is at a level that is above a threshold value.

15. The method of claim 14, and further comprising detecting vehicle activity information, wherein in the step of controlling the distribution, the distribution is further controlled to only allow distribution of the fluid from the reservoir to the battery chamber when the detected vehicle activity information indicates that the vehicle is not active.
